# EUROPEAN PATENT APPLICATION

(11) **EP 0 838 185 A1**
(43) Date of publication of application: **29.04.1998**
(21) Application number: 97118294.4
(22) Date of filing: 21.10.1997
(51) Int. Cl.: A47J 31/06

(54) **Espresso coffee machine**

(30) Priority: 22.10.1996 IT TO960861
(71) Applicant: ESSEGIELLE S.r.l, I-10156 Torino (IT)
(72) Inventor: Cortese, Virginio, 10100 Torino (IT)
(74) Representative: Jorio, Paolo

(57) **Abstract**

An espresso coffee machine (1) wherein a coffee pan (3) is connected releasably to a boiler (2) via the interposition of an annular body (5) fitted to the boiler (2) in rotary and axially-sliding manner about and along a first axis (4) by means of a bayonet joint (7); a prismatic connection (33) being provided to connect the annular body (5) and the pan (3), and having a guide (22) and a slide (30) formed respectively on the annular body (5) and the pan (3); and the slide (30) being movable along a second axis (23) perpendicular to the first axis (4).

## Description

The present invention relates to an espresso coffee machine.

On espresso coffee machines, a coffee pan comprising a movable portion of a bayonet joint at the top is connected to a tubular body or support defining the bottom end of a boiler and in turn comprising a fixed portion of the bayonet joint. The connection is normally made by inserting the pan inside a circular bottom opening in the tubular support, and then rotating the pan with respect to the support so as to tighten the bayonet joint and, by axially displacing the pan with respect to the tubular support, obtain a fluidtight connection between the free edge of the pan and a face seal fitted to the tubular support.

Known machines of the above type involve several functional drawbacks. The bottom circular opening of such machines, in fact, is located at such a height as to be partly concealed from view, so that a certain amount of skill is required to connect the two portions of the joint correctly at the first attempt.

It is an object of the present invention to provide an espresso coffee machine designed to eliminate the aforementioned drawback in a straightforward, low-cost manner.

According to the present invention, there is provided an espresso coffee machine comprising a boiler; a coffee pan coaxial with the boiler along a first axis; connecting means for releasably connecting the pan to the boiler; and axial pressure means for connecting the pan in fluidtight manner to the boiler; characterized by also comprising an annular body interposed between the boiler and the pan and fitted in rotary manner to the boiler; said connecting means comprising a prismatic guide-slide connection directed along a second axis perpendicular to the first axis, and interposed between the pan and the annular body; and said pressure means being interposed between the annular body and the boiler.

A non-limiting embodiment of the present invention will be described by way of example with reference to the accompanying drawings, in which:
Figure 1 shows an exploded view in perspective, with parts in section and parts removed for clarity, of a preferred embodiment of the espresso coffee machine according to the present invention;
Figure 2 shows a plan view, with parts in section and parts removed for clarity, of the Figure 1 machine;
Figures 3 and 4 show plan views, with parts in section and parts removed for clarity, of the Figure 1 machine in respective operating positions;
Figures 5 and 6 show sections along lines V-V and VI-VI of Figures 3 and 4 respectively.

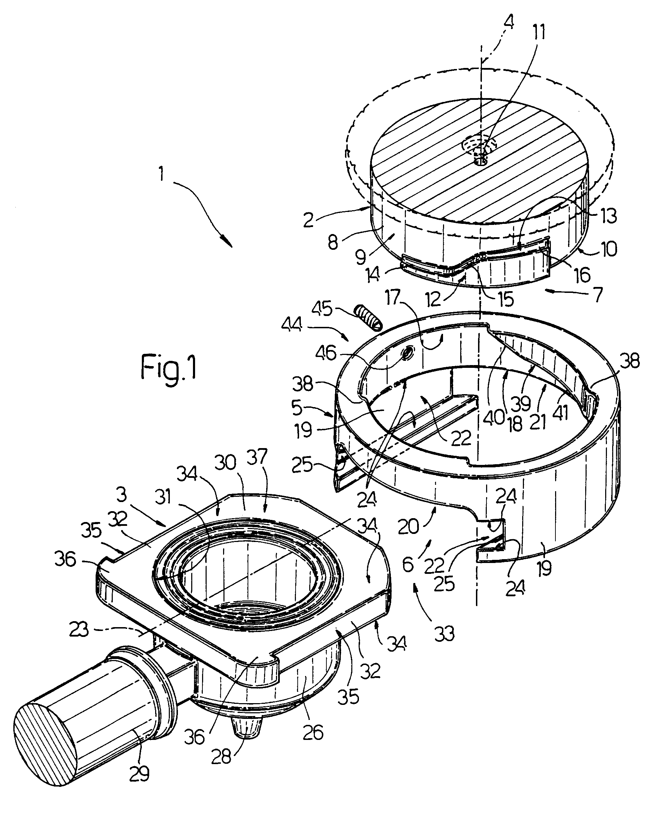

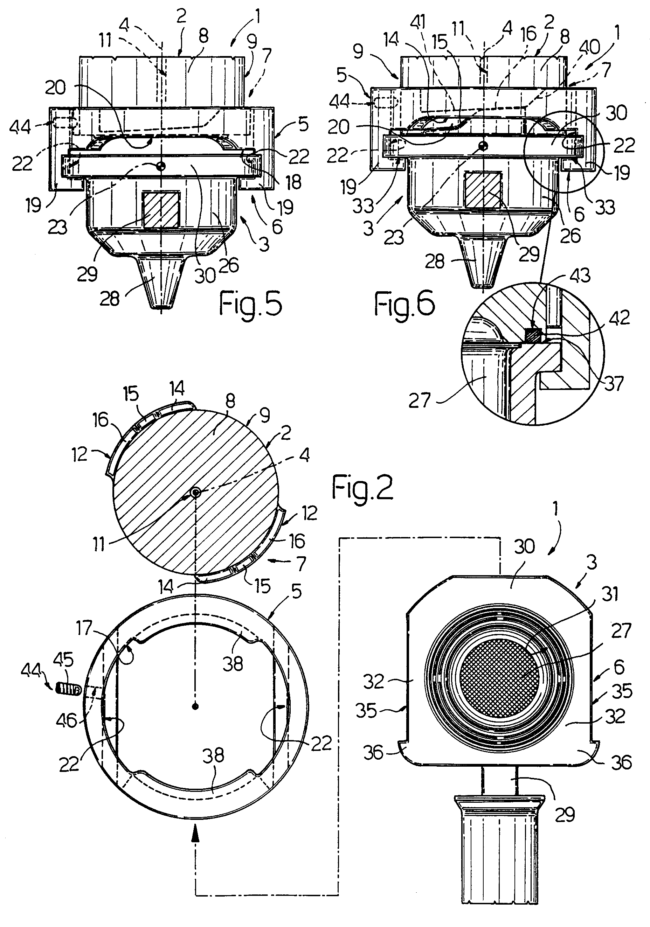

Number 1 in Figures 1 and 2 indicates as a whole an espresso coffee machine comprising a boiler 2; a coffee pan 3 coaxial with boiler 2 along a vertical axis 4; and an annular body 5, which is interposed between boiler 2 and pan 3, is substantially coaxial with axis 4, and is fitted to boiler 2 so as to rotate about axis 4.

Machine 1 also comprises a connecting device 6 interposed between annular body 5 and pan 3 to releasably connect pan 3 to boiler 2; and a pressure device 7 interposed between pan 3 and boiler 2 to connect pan 3 and boiler 2 in fluidtight manner.

Boiler 2 is defined by a tubular body or support 8 coaxial with axis 4 and in turn defined laterally by a substantially cylindrical surface 9, and at the bottom by a flat surface 10 crosswise to axis 4. Body 8 comprises a central conduit 11 for the passage of hot water; and two shaped outer projections 12 extending radially outwards from surface 9, located diametrically opposite each other along surface 9, and defined at the bottom by surface 10, and at the top by a surface 13 comprising three inclined portions 14, 15, 16. Portions 14 and 16 are inclined at substantially the same angle, and are located respectively at a lower and a higher level with respect to portion 15; and portion 15 is located between, and inclined at a greater angle as compared with, portions 14 and 16.

Annular body 5 is connected in rotary and axially-sliding manner to tubular body 8 of boiler 2, is defined internally by a substantially cylindrical inner surface 17 of a diameter approximately equal to but no smaller than the diameter of surface 10, is defined at the bottom by an annular surface 18 crosswise to axis 4, and comprises two parallel appendixes 19 extending parallel to axis 4 from surface 18, and from diametrically opposite portions of body 5.

Together with surface 18, appendixes 19 define a substantially U-shaped front opening 20 and a substantially U-shaped rear opening 21, and comprise respective prismatic grooves 22 facing each other, extending between openings 20 and 21, and formed along appendixes 19 in a direction parallel to an axis 23 crosswise to axis 4. In the embodiment shown, each groove 22 has a rectangular cross section, is defined at the top and bottom by flat surfaces 24 parallel to each other and to axis 23, and is defined laterally by a further flat surface 25 crosswise to and connecting surfaces 24.

Pan 3 comprises a cup-shaped body 26 for housing a ready-made substantially cylindrical rigid wafer 27 or, according to an embodiment not shown, loose coffee, and which in turn comprises a central drain conduit 28 coaxial with axis 4, and an outer radial handle 29 extending parallel to axis 23 from cup-shaped body 26. Pan 3 also comprises a top flange or plate 30, which is connected rigidly to cup-shaped body 26 on the opposite side to conduit 28, is crosswise to axis 4, and comprises a substantially circular central opening 31 by which to insert a wafer 27 inside cup-shaped body 26.

Plate 30 is substantially rectangular, and comprises two opposite prismatic lateral edges 32, which slide inside grooves 22, in axially loose manner along axis 4, and define, with grooves 22, a prismatic guide-slide connection 33 forming part of connecting device 6 and wherein the guide is defined by grooves 22 and the slide by plate 30. Each edge 32 is defined at the top and bottom by respective flat surfaces 34 parallel to each other and to surfaces 24, is defined laterally by a respective further flat surface 35 crosswise to surfaces 34 and parallel to surface 25, and comprises a respective stop tooth 36, which contacts relative appendix 19 at front opening 20 to limit the insertion travel of pan 3 inside annular body 5. Plate 30 also comprises an upper sealing surface 37 coplanar with upper flat surfaces 34 and fully surrounding opening 31.

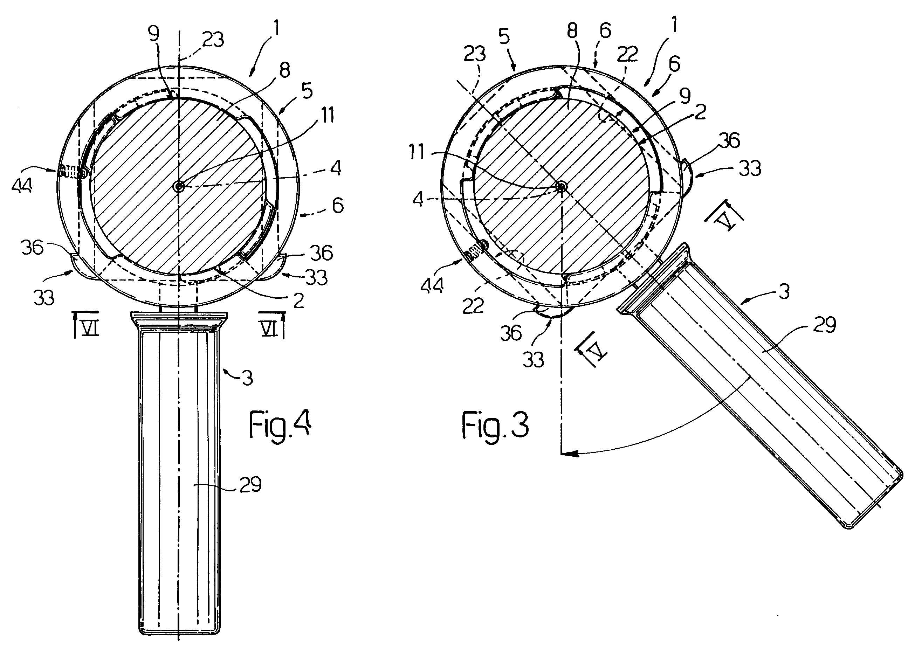

As shown in Figures 3 to 6, in addition to shaped projections 12, pressure device 7 also comprises a further pair of shaped inner projections 38 (Figures 1 and 2), which extend radially inwards from surface 17 of annular body 5, are located diametrically opposite each other along surface 17, and mate with projections 12. Each projection 38 is defined at the bottom by a surface 39 contacting relative surface 13 and comprising two inclined portions 40 and 41; portion 40 is inclined at substantially the same angle as relative portion 15; and portion 41 is inclined at substantially the same angle as portions 14, 16, and is located over and contacting portion 16.

Together with projections 12, projections 38 define a bayonet joint for axially connecting pan 3 and boiler 2, and cooperate with projections 12 to move annular body 5 along axis 4 as pan 3 is rotated about axis 4 between a work position (Figures 4 and 6) in which opening 20 is positioned obliquely with respect to machine 1 and portions 16 and 41 are positioned contacting each other, and an insertion/withdrawal position (Figures 3 and 5) in which front opening 20 of annular body 5 is located at the front of machine 1 to permit insertion and withdrawal of pan 3 from annular body 5 by means of connecting device 6, and portions 14 and 41 are positioned contacting each other.

More specifically, annular body 5 is movable along axis 4 between a first withdrawn axial position (Figures 4 and 6) corresponding to the work position and in which upper sealing surface 37 is positioned substantially contacting bottom surface 10 of boiler 2 so as to compress a sealing ring 42 housed inside an annular groove 43 formed in surface 10, and a second extracted axial position (Figures 3 and 5) corresponding to the insertion/withdrawal position and in which surfaces 10 and 37 are separated by a given distance and the lateral edges 32 of pan 3 are free to slide along respective grooves 22.

Finally, machine 1 comprises a stop device 44 for preventing annular body 5 from becoming detached from boiler 2 beyond said second axial position, and which comprises a threaded pin 45 fitted inside a hole 46 formed through annular body 5, between projections 38. More specifically, pin 45 projects from inner surface 17 of body 5, and contacts one of projections 12 to arrest rotation of body 5 between said work position and said insertion/withdrawal position, and so prevent inner projections 38 from becoming offset angularly and completely with respect to outer projections 12, and annular body 5 from becoming detached from tubular body 8.

In actual use, to load a fresh wafer 27 inside cup-shaped body 26, pan 3 is released from machine 1 by rotating pan 3 (clockwise in Figure 3) from the work position corresponding, as stated, to the first withdrawn axial position, into the insertion/withdrawal position corresponding to the second extracted axial position.

Rotation of pan 3 moves inner projections 38 with respect to outer projections 12, so that portions 41 slide with respect to portions 16, which, being inclined with respect to axis 4, move pan 3 away from tubular body 8 of boiler 2 while at the same time axially displacing annular body 5. More specifically, when portions 41 are positioned over and contacting respective portions 14, pan 3 is fully detached from boiler 2, and edges 32 are axially loose, along axis 4, with respect to grooves 22.

At this point, pan 3 may be withdrawn from annular body 5 by sliding edges 32 along grooves 22 in a direction parallel to axis 23.

Insertion and connection of pan 3 to boiler 2 are performed substantially in the same way, only in reverse, as for release and withdrawal. More specifically, once wafer 27 is inserted inside cup-shaped body 26, top plate 30 of pan 3 is simply inserted through front opening 20 to engage lateral edges 32 and grooves 22 by pushing pan 3 along axis 23 until teeth 36 contact annular body 5.

At this point, when pan 3 is rotated about axis 4 in the opposite direction to before, pan 3 and annular body 5 are guided axially to bring pan 3 gradually closer to boiler 2.

As pan 3 is rotated about axis 4, portions 40 of projections 38 contact portions 15 of projections 12 to produce a decisive axial movement of pan 3 towards boiler 2; and, as portions 41 engage respective portions 16, and upper surface 37 of plate 30 contacts sealing ring 42, further rotation of pan 3 provides for tightly connecting tubular body 8, annular body 5 and pan 3 to connect pan 3 in fluidtight manner to tubular body 8.

## Claims

1. An espresso coffee machine (1) comprising a boiler (2); a coffee pan (3) coaxial with the boiler (2) along a first axis (4); connecting means (6) for releasably connecting the pan (3) to the boiler (2); and axial pressure means (7) for connecting the pan (3) in fluidtight manner to the boiler (2); characterized by also comprising an annular body (5) interposed between the boiler (2) and the pan (3) and fitted in rotary manner to the boiler (2); said connecting means (6) comprising a prismatic guide-slide connection (33) directed along a second axis (23) perpendicular to the first axis (4), and interposed between the pan (3) and the annular body (5); and said pressure means (7) being interposed between the annular body (5) and the boiler (2).

2. A machine as claimed in Claim 1, characterized in that said prismatic guide-slide connection (33) comprises a guide (22) defined between two parallel appendixes (19) extending, parallel to said first axis (4), from the annular body (5) and from diametrically opposite portions of the annular body (5); and a slide (30) defined at least partly by a flange (30) having two parallel opposite lateral edges (32); each edge (32) engaging in sliding manner a respective said appendix (19).

3. A machine as claimed in Claim 2, characterized in that said appendixes (19) comprise respective grooves (22) formed along the appendixes (19) in a direction parallel to said second axis (23); each said edge engaging a respective groove in sliding manner along said second axis (23).

4. A machine as claimed in Claim 3, characterized in that said annular body (5) is fitted to said boiler (2) so as to slide axially between a first withdrawn axial position and a second extracted axial position; stop means (44) being provided to prevent detachment of the annular body (5) from the boiler (2) beyond said second position.

5. A machine as claimed in Claim 4, characterized in that said pressure means comprise a bayonet joint in turn comprising a fixed portion (12) integral with said boiler (2), and a movable portion (38) integral with said annular body (5).

6. A machine as claimed in Claim 4 or 5, characterized in that said stop means (44) comprise a stop member (45) fitted through said annular body (5) and acting as a fixed stop for said movable portion (38) of the bayonet joint.

7. A machine as claimed in any one of the foregoing Claims from 3 to 6, characterized in that said edges (32) comprise respective stop elements (36) releasably contacting said appendixes (19).
